# EUROPÄISCHE PATENTSCHRIFT

(11) **EP 1 316 833 B1**
(45) Veröffentlichungstag und Bekanntmachung des Hinweises auf die Patenterteilung: **28.07.2004**
(21) Anmeldenummer: 03004725.2
(22) Anmeldetag: 22.04.2000
(51) Int. Cl.: G02B 21/06

(54) **Durchlicht - Beleuchtungseinrichtung für Mikroskope**
Transmitted light/lighting device for microscopes
Dispositif d'éclairage par transmission pour microscopes

(30) Priorität: 27.04.1999 DE 19919096
(43) Veröffentlichungstag der Anmeldung: 04.06.2003
(62) Teilanmeldung aus: 00938611.1
(73) Patentinhaber: CARL ZEISS JENA GMBH, 07745 JENA (DE)
(72) Erfinder: Tandler, Hans, 07745 Jena (DE); Gonschor, Matthias, 37130 Gleichen (DE); Gretscher, Peter, 07749 Jena (DE)
(74) Vertreter: Hampe, Holger

(56) Entgegenhaltungen:
- US-A- 4 601 551
- US-A- 4 852 985
- US-A- 5 690 417
- PATENT ABSTRACTS OF JAPAN vol. 016, no. 386 (P-1404), 18. August 1992 (1992-08-18) & JP 04 125609 A (SATOSHI KAWADA;OTHERS: 01), 27. April 1992 (1992-04-27)

## Beschreibung

Beleuchtungsanordnungen an Mikroskopen haben einen relativ schlechten Wirkungsgrad bei der Umsetzung von aufgenommener elektrischer Leistung in nutzbare Lichtleistung und sie erzeugen störende Wärme.
Darüber hinaus werden bei aufrechten Stativen Bauräume benötigt, die ergonomisch günstige Anordnungen des Mikroskoptisches verhindern. Schliesslich sind die Lösungen bauteilaufwendig und damit teuer. Beleuchtungseinrichtungen für Mikroskope mit LED's bzw. LCD's sind aus DE 3108389A1, US 4852985,DE 3734691 C2, DE 19644662A1 bekannt.

Die genannten Nachteile sollen durch eine LED-Beleuchtungseinheit - bestehend aus mehreren angeordneten LED's - beseitigt werden, die wahlweise netzabhängig oder durch Batterien betrieben werden.

Diese Aufgabe wird durch die Merkmale des unabhängigen Anspruchs gelöst. Bevorzugte Weiterbildungen sind Gegenstand der abhängigen Ansprüche.

Die Erfindung und ihre Wirkungen und Vorteile werden nachstehend anhand einer schematischen Zeichnung erläutert.

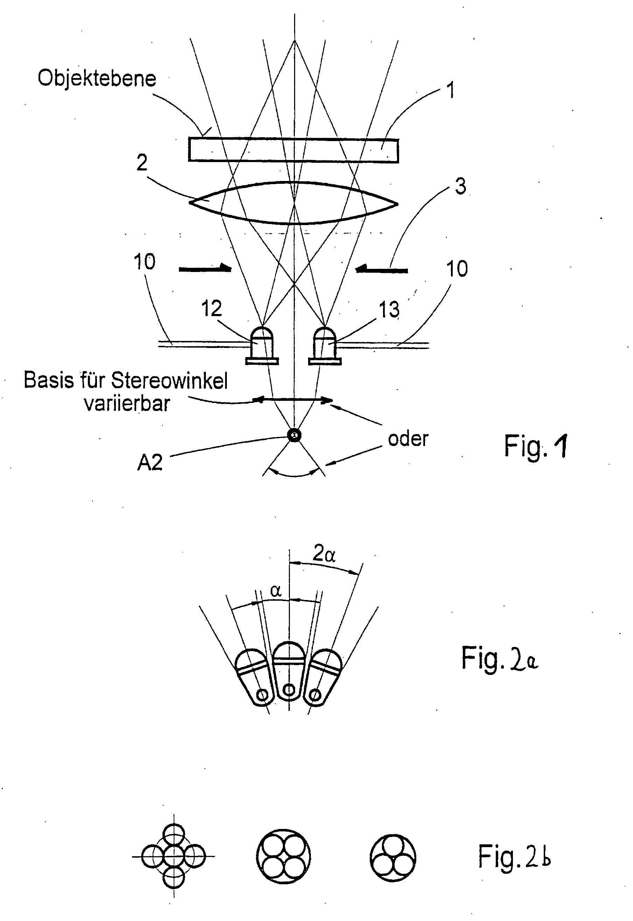

In Fig. 1 ist unter einem durchsichtigen Mikroskoptisch 1, auf dem sich eine Probe befindet, die durch ein nicht dargestelltes Objektiv betrachtet wird, eine Beleuchtungseinheit, bestehend aus Kondensoroptik 2 und Aperturblende 3, angeordnet, die weiteren Teile des Mikroskopstatives sind hier nicht dargestellt.

Zwei Weisslicht-LED's 12, 13 werden, wie im Bild 1 dargestellt, in der Nähe der Apereturblendenebene angeordnet. Die LEDs werden über Leitungen 10 von einer Stromversorgung elektrisch versorgt.

Dabei können die Winkel zwischen den Mittenachsen der LED und/ oder deren Abstand zur optischen Achse verändert werden.
Hierzu sind die LED senkrecht zur optischen Achse, wie durch die Pfeile angedeutet, verschiebbar oder um eine Drehachse A2 senkrecht zur Zeichenebene schwenkbar.

Diese Anordnung der LEDs kann vorteilhaft zur Realisierung des Raumbildverfahrens mit getakteter Beleuchtung verwendet werden, wie es von der Anmelderin in EP 730 181, auf deren kompletten Inhalt hiermit Bezug genommen wird, vorgeschlagen wurde.

Mit zur Beobachtung getakteter Beleuchtung ändert sich auf diese Weise der Beleuchtungswinkel und durch Verschiebung und/oder Verschwenkung der LED's ist die Basis für die räumliche Betrachtung einstellbar.

In Fig. 2 ist dargestellt, wie mehrere Weisslicht-LED's zu einer gemeinsamen Strahlungsquelle zusammengefasst werden können.

Hierzu sind die LED's so angeordnet, dass sich die Tangenten ihrer Abstrahlkegel berühren (Fig. 2a), indem der Winkel zwischen den Mittenachsen ihrer Abstrahlkegel im Wesentlichen mit dem Winkel des Abstrahlkegels übereinstimmt.
Über das flächenhafte Parallelschalten einzelner LED's in verschiedenen Anordnungen wie in Fig. 2b dargestellt, kann eine größere strahlende Fläche mit dem gleichen Divergenzwinkel wie der einer einzelnen LED angeboten werden. Durch das gerichtete Verkippen u. straussförmige Zusammenfassen der einzelnen LED's in der Weise, dass sich die Tangenten der Abstrahlkegel berühren, werden sowohl eine größere Fläche als auch ein größerer summarischer Abstrahlwinkel erzeugt.

Des Weiteren kann die Ausleuchtung auch durch ein Array aus Mikrolinsen mit unterschiedlichen Brennweiten hindurch erfolgen.

Weitere Vorteile des Einsatzes der LED-Beleuchtungseinheit sind lange Lebensdauer, minimaler Energiebedarf, tageslichtähnliche Farbtemperatur, farbtemperatur-unabhängige Helligkeitsregelung und geringe Wärmeentwicklung.

## Patentansprüche

1. Durchlichtbeleuchtungseinrichtung für Mikroskope, umfassend eine Kondensoroptik (2), eine Aperturblende (3), sowie zwei ausserhalb der optischen Achse angeordnete LED - Lichtquellen (12, 13), deren Abstand zur optischen Achse durch Verschiebung und/ oder Verschwenkung um eine gemeinsame Drehachse (A2) veränderbar ist.

2. Durchlichtbeleuchtungseinrichtung nach Anspruch 1, wobei die LED-Lichtquellen im Takt der Beobachtung wechselweise ein- und ausschaltbar sind.

3. Durchlichtbeleuchtungseinrichtung nach einem der vorangehenden Ansprüche , wobei die LED-Lichtquellen (12, 13) Weisslicht LED's sind.

4. Durchlichtbeleuchtungseinrichtung nach einem der vorangehenden Ansprüche , wobei mehrere LED's nebeneinander, vorzugsweise bezüglich ihrer Halterung schalenförmig, angeordnet sind und sich ihre Lichtkegel tangieren oder überlappen.

5. Durchlichtbeleuchtungseinrichtung nach Anspruch 4, wobei die Anordnung der LED's im wesentlichen einer sphärischen Fläche entspricht.

## Claims

1. Transmitted-light lighting device for microscopes, comprising a condenser lens (2), an aperture stop (3) and two LED light sources (12, 13) which are disposed outside the optical axis and whose spacing with respect to the optical axis can be changed by displacement and/or pivoting movement about a common axis of rotation (A2).

2. Transmitted-light lighting device as claimed in claim 1, wherein the LED light sources can be switched on and off alternately in time with the observation.

3. Transmitted-light lighting device as claimed in any one of the preceding claims, wherein the LED light sources (12, 13) are white light LEDs.

4. Transmitted-light lighting device as claimed in any one of the preceding claims, wherein several LEDs are disposed adjacent to one another, preferably in a dish-shaped manner in relation to their holder, and their light cones are tangential to one another or overlap.

5. Transmitted-light lighting device as claimed in claim 4, wherein the arrangement of the LEDs corresponds substantially to a spherical surface.

## Revendications

1. Dispositif d'éclairage par transmission pour microscopes, comprenant une optique de condensateur (2), un diaphragme d'ouverture (3) ainsi que deux sources de lumière DEL (12,13) disposées à l'extérieur de l'axe optique, dont l'écart relativement à l'axe optique peut être modifié par déplacement et/ou pivotement autour d'un axe de rotation (A2) commun.

2. Dispositif d'éclairage par transmission selon la revendication 1, où les sources de lumière DEL, selon la cadence de l'observation, peuvent être alternativement mises en et hors service.

3. Dispositif d'éclairage par transmission selon l'une des revendications précédentes, où les sources de lumière DEL (12,13) sont des DEL de lumière blanche.

4. Dispositif d'éclairage par transmission selon l'une des revendications précédentes, où plusieurs DEL sont disposées les unes à côté des autres, de préférence en ce qui concerne leur retenue en forme de coque, et leurs cônes de lumière se touchent ou se chevauchent.

5. Dispositif d'éclairage par transmission selon la revendication 4, où la disposition des DEL correspond sensiblement à une face sphérique.
